Europäisches Patentamt

European Patent Office

Office européen des brevets

(19)

(11) **EP 0 737 848 A1**

(12) **EUROPÄISCHE PATENTANMELDUNG**

(43) Veröffentlichungstag:
16.10.1996 Patentblatt 1996/42

(51) Int. Cl.6: **G01F 1/699**

(21) Anmeldenummer: 96101085.7

(22) Anmeldetag: 26.01.1996

(84) Benannte Vertragsstaaten:
**DE FR GB IT**

(30) Priorität: **10.04.1995 DE 19513526**

(71) Anmelder: **ROBERT BOSCH GMBH**
**70442 Stuttgart (DE)**

(72) Erfinder:
• **Zabler, Erich, Dr.-Ing.**
**D-76297 Stutensee (DE)**
• **Gerlach, Günther, Ing.**
**D-76437 Rastatt (DE)**
• **Dukart, Anton, Dipl.-Ing.**
**D-76744 Wörth (DE)**

(54) **Auswerteschaltung für einen Massenstromsensor**

(57)    Es wird eine Auswerteschaltung für einen Massenstromsensor mit einem im Massenstrom liegenden Sensorelement, das einen Heizer und mehrere vom Heizer erwärmbare Temperaturmeßelemente sowie ein Temperaturmeßelement zur Erfassung der Fluidtemperatur umfaßt, angegeben, wobei eine Regelung vorgesehen ist, die den Heizer durch Zu- oder Abschaltung der Versorgungsspannung auf einer konstanten Übertemperatur bezogen auf das strömende Fluid halten. Zur Erhöhung der Genauigkeit sowie zur Kennlinienkompensation weist die Auswerteschaltung mehrere Verstärker auf, mit deren Hilfe die Temperaturabhängigkeit des Widerstandes des Heizers kompensiert werden kann.

Fig.1

EP 0 737 848 A1

**Beschreibung**

Stand der Technik

Die Erfindung geht aus von einer Auswerteschaltung für einen Massenstromsensor nach der Gattung des Hauptanspruchs.

Es ist bekannt, daß die Masse eines strömenden Mediums bestimmt werden kann, indem ermittelt wird, wieviel Wärme ein strömendes Medium einem beheizten Körper entzieht. Dabei ist die Strömungsgeschwindigkeit des Fluids sowie die Temperaturdifferenz zwischen dem beheizten Körper und dem Fluid zu berücksichtigen.

Ein Massenstromsensor einschließlich der zugehörigen Auswerteschaltung, mit dessen Hilfe die an einem Sensorelement vorbeiströmende Luftmasse ermittelt werden kann, ist aus der DE-OS 43 24 040 bekannt. Bei dieser bekannten Anordnung umfaßt das Sensorelement einen Heizer, zwei Temperaturfühler, einen Heizertemperaturfühler sowie einen Medientemperaturfühler. Die Auswerteschaltung umfaßt Regelmittel, die die Übertemperatur des Heizers in Abhängigkeit von der Temperatur des strömenden Mediums regeln. Durch diese Maßnahme wird der Einfluß der Temperaturabhängigkeit der Viskosität, der Wärmeleitfähigkeit oder der Wärmekapazität des Mediums auf die Sensorkennlinie kompensiert. Eine Kompensation der Temperaturabhängigkeit des Widerstandswertes des Heizers erfolgt jedoch nicht. Dieser bekannte Massenstromsensor wird dabei zur Ermittlung der von einer Brennkraftmaschine angesaugten Luftmasse eingesetzt.

Vorteile der Erfindung

Die erfindungsgemäße Auswerteschaltung für einen Massenstromsensor mit den Merkmalen des Anspruchs 1 hat den Vorteil, daß ein besonders genaues Massenflußsignal in einem relativ weiten Temperaturbereich des strömenden Fluids erhalten wird. Es ist weiterhin vorteilhaft, daß das Ausgangssignal der erfindungsgemäßen Schaltungsanordnung in dem auszuwertenden Meßbereich mit Sicherheit innerhalb geeigneter Spannungsgrenzen liegt.

Besonders vorteilhaft ist, daß sich die erfindungsgemäße Schaltungsanordnung besonders eignet für Sensoren, die wie die Auswerteschaltung selbst auf einem Halbleiterchip, beispielsweise aus Silizium, angeordnet sind bzw. die Bestandteil dieses Chips selbst sind.

Erzielt werden diese Vorteile mit zusätzlichen Auswertemitteln, die die Temperaturabhängigkeit des Widerstandes des Heizers kompensieren, so daß Temperaturabhängigkeiten, die aufgrund der physikalischen Eigenschaften von Silizium auftreten, nicht zu Ungenauigkeiten bei der Signalauswertung führen.

Weitere Vorteile der Erfindung werden durch die in den Unteransprüchen angegebenen Maßnahmen erzielt.

Der Einsatz des Massenstromsensors sowie der erfindungsgemäßen Auswerteschaltung als thermischer Massenflußsensor für Flüssigkeiten ermöglicht es, daß Messungen in einem weiten Bereich möglich sind, insbesondere sind auch geringe Flüssigkeitsflüsse im Bereich von hundertstel Gramm pro Minute noch zuverlässig meßbar.

Zeichnung

Ein Ausführungsbeispiel der Erfindung ist in der Zeichnung dargestellt und wird in der nachfolgenden Beschreibung näher erläutert. Es zeigt im einzelnen Figur 1 eine erfindungsgemäße Auswerteschaltung einschließlich des zugehörigen Sensors, Figur 2 verschiedene Spannungsverläufe über der Temperatur und Figur 3 Spannungsdifferenzen über der Temperatur in Prozent.

Beschreibung

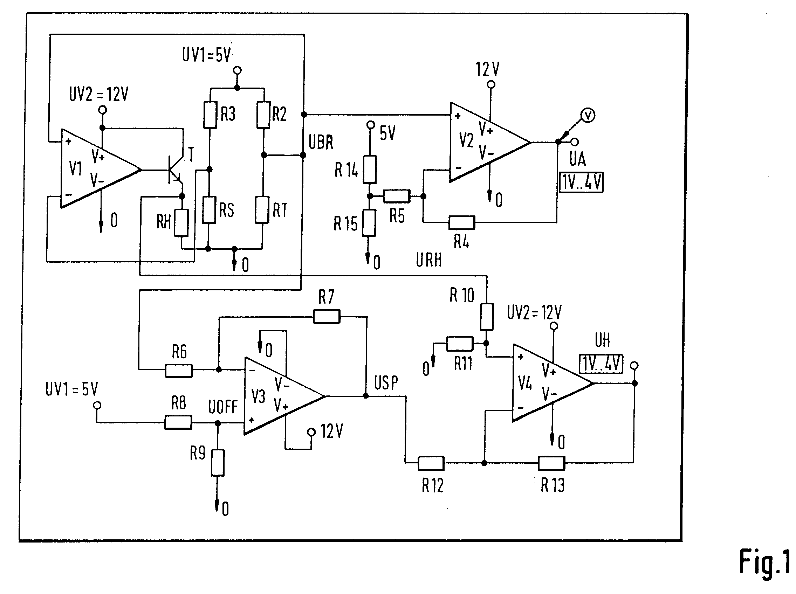

In Figur 1 ist der Sensor samt der zugehörigen Auswerteschaltung dargestellt. Dabei besteht der Sensor aus der Brückenschaltung der Widerstände R2, R3, RS und RT sowie dem als Widerstand RH bezeichneten Heizer. Die Widerstände RS und RT sind Temperatursensoren, wobei der Widerstand RS auch aus zwei Einzelwiderständen RS1, RS2 bestehen kann.

Der Heizer RH sowie der Temperatursensor RS sind einander räumlich eng zugeordnet, so daß der Temperatursensor RS vom Heizer RH erwärmt wird.

Der Widerstand RT ist der eigentliche Meßwiderstand. Die Widerstände RS, RH und RT sind diffundierte Widerstände, die alle einen Temperaturgang TK aufweisen, der auch unterschiedlich sein kann. Die gesamte Schaltungsanordnung nach Figur 1 ist beispielsweise auf einem Siliziumchip integriert. Mit Hilfe der Auswerteschaltung wird der Heizer auf eine konstante Übertemperatur zum Medium geregelt.

Die Sensorbrücke R2, R3, RS, RT liegt zwischen einer Versorgungsspannung UV1 von beispielsweise 5 Volt und Masse. Der Heizer RH ist mit Hilfe eines Transistors T, der vom Verstärker V1 angesteuert wird, an die Versorgungsspannung UV2 = 12 Volt schaltbar. Der Verstärker V1 stellt einen Proportionalregler dar, dessen Eingängen die Brückenspannung UBR zugeführt wird.

Die Brückenspannung UBR der Sensorbrücke wird auch dem nicht invertierenden Eingang eines weiteren Verstärkers V2 zugeführt. Der invertierende Eingang dieses Verstärkers V2 liegt über den Widerstand R5 am Spannungsteiler R14, R15. Der Ausgang des Verstärkers V2 ist mit dem invertierenden Eingang über den Widerstand R4 rückgekoppelt. Am Ausgang V des Verstärkers V2 entsteht die Ausgangsspannung UA, die mit den in Figur 1 angegebenen Versorgungsspannungen UV1 = 5 Volt und UV2 = 12 Volt im Bereich zwischen 1 und 4 Volt liegt und das Temperatursignal darstellt.

Die am Heizer RH anliegende Spannung URH wird über den Widerstand R10 dem nicht invertierenden Eingang des Verstärkers V4 zugeführt. Zwischen dem nicht invertierenden Eingang des Verstärkers V4 und Masse liegt ein weiterer Widerstand R11. Der Ausgang des Verstärkers V4 ist über den Widerstand R13 mit dem invertierenden Eingang verbunden. Am Ausgang des Verstärkers V4 entsteht die kompensierte Heizerspannung UH, die mit den angegebenen Spannungen im Bereich zwischen 1 und 4 Volt liegt.

Die Kompensation der Temperaturabhängigkeit des Widerstandes des Heizers RH wird mit Hilfe der Verstärkeranordnung V3 sowie den zugehörigen Widerständen erzielt. Im einzelnen wird dem Verstärker V3 das Temperatursignal über den Widerstand R6 zugeführt. Dem nicht invertierenden Eingang des Verstärkers V3 wird eine Offsetspannung UOFF zugeführt, die über einen Spannungsteiler R8, R9, der zwischen UV1 und Masse liegt, eingestellt wird. Der Ausgang des Verstärkers V3 ist über den Widerstand R7 mit dem invertierenden Eingang verbunden. Am Ausgang des Verstärkers V3 entsteht die Spannung USP. Mit Hilfe dieser Spannung läßt sich die Temperaturabhängigkeit des Heizwiderstandes so kompensieren, daß keine Kennlinienverfälschung auftritt. Zur Kompensation wird der bereits vorhandene Temperatursensor RT verwendet, es wird dann vom Spannungsteiler R2/RT die mit Hilfe der Widerstände R8 und R9 eingestellte Offsetspannung abgezogen. Außerdem wird das erhaltene Signal mit einer Verstärkung V3 verstärkt.

Durch diese Maßnahme wird eine Spannung USP erhalten, die im auszuwertenden Temperaturbereich bei einem Durchfluß von 0 nahezu exakt mit der Heizerspannung übereinstimmt. Eine geringe Abweichung ist nur noch durch die unterschiedlichen Temperaturkoeffizienten vorhanden. Die Spannung USP(T) läßt sich wie folgt angeben:

$$USP(T) = (RT(T) / (R2 + RT(T)) \cdot 5 \text{ V} - UOFF) \, V3 + 1 \text{ V}$$

Die Spannung USP wird im Verstärker V4, der einen Subtrahierer darstellt, vom Heizersignal abgezogen. Am Ausgang des Verstärkers V4 entsteht daher die gewünschte kompensierte Heizerspannung UH, die für weitere Auswertungen verwendet werden kann.

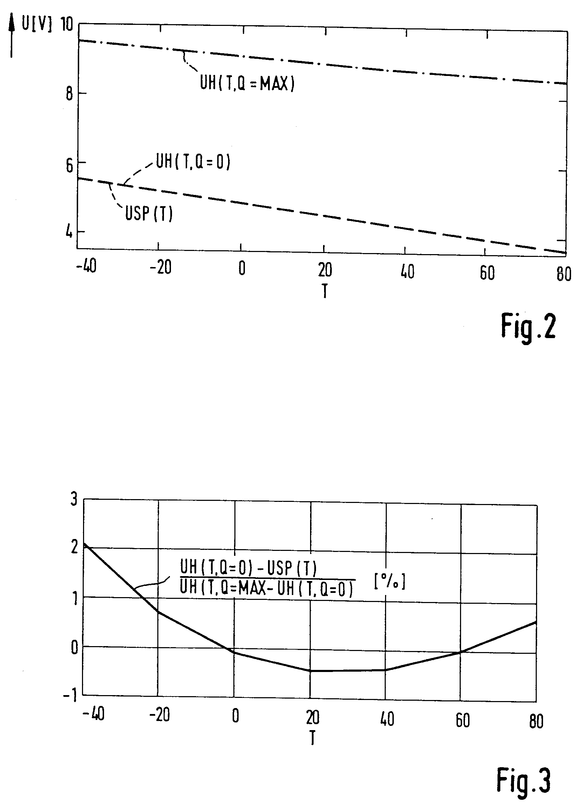

In Figur 2 ist die Temperaturabhängigkeit der Heizerspannung für einen Durchfluß von Q = 0 sowie einen Durchfluß von Q = MAX aufgetragen. Außerdem ist die Kompensationsspannung USP über der Temperatur in einem Bereich zwischen -40 °C und +80 °C aufgetragen.

In Figur 3 ist der Fehler des Heizersignals in Prozent über der Temperatur aufgetragen, wobei sich der Temperaturbereich wiederum zwischen -40 °C und +80 °C erstreckt.

Die Auswertung der Spannungen UA sowie UH an den Ausgängen der Verstärker V2 bzw. V4 läßt sich beispielsweise mit Hilfe eines nachgeschalteten Mikroprozessors durchführen. Die Schaltung einschließlich des Sensors kann als mikromechanische Siliziumschaltung aufgebaut sein. Die gesamte Anordnung kann als thermischer Massenflußsensor für Flüssigkeiten verwendet werden und ist geeignet, auch sehr geringe strömende Flüssigkeitsmengen richtig zu detektieren.

Die Sensoranordnung kann beispielsweise zur Ermittlung des eingespritzten Kraftstoffs bei einer Brennkraftmaschine verwendet werden oder in der Medizintechnik zur Messung sehr kleiner Flüssigkeitsmengen.

**Patentansprüche**

1. Auswerteschaltung für einen Massenstromsensor mit wenigstens einem im Massestrom liegenden Sensorelement, das wenigstens einen Heizer und wenigstens ein oder zwei vom Heizer erwärmbare Temperaturmeßelemente umfaßt, wobei ein Temperaturmeßelement zur Erfassung der Massenstromtemperatur vorgesehen ist, mit Regelmitteln, die den Heizer über eine Beeinflussung seiner Spannungsversorgung auf konstante Übertemperatur bezüglich des Massenstromes regeln, dadurch gekennzeichnet, daß die Auswerteschaltung Mittel umfaßt, die die Temperaturabhängigkeit des Widerstandes des Heizers kompensieren.

2. Auswerteschaltung nach Anspruch 1, dadurch gekennzeichnet, daß die Kompensationsmittel Mittel zur Erzeugung eines Offsets (UOFF) sowie Mittel zur Verstärkung umfassen und eine temperaturabhängige Spannung (USP(T)) erzeugen, die in etwa der Heizerspannung bei einem Massefluß von Q = 0 entspricht.

3. Auswerteschaltung nach Anspruch 2, dadurch gekennzeichnet, daß die Spannung (USP(T)) gebildet wird nach der Formel:

$$USP(T) = (RT(T) / (R2 + RT(T)) \cdot 5\,V - UOFF)\, V3 + 1\,V$$

4. Auswerteschaltung nach einem der vorhergehenden Ansprüche, dadurch gekennzeichnet, daß die Kompensationsmittel zwei Verstärker (V3, V4) umfassen, daß einem Eingang des Verstärkers (V3) die Ausgangsspannung der Brücke (UBR) zugeführt wird, daß dem anderen Eingang des Verstärkers (V3) eine Offsetspannung (UOFF) zugeführt wird und daß am Ausgang des Verstärkers (V3) die Spannung (USP) entsteht, die dem Verstärker (V4) zugeführt wird und in diesem von der Heizerspannung (URH) subtrahiert wird, zur Erzeugung der kompensierten Heizerspannung (URH) am Ausgang des Verstärkers (V4).

5. Auswerteschaltung nach einem der Ansprüche 1 bis 3, dadurch gekennzeichnet, daß am Eingang des Verstärkers (V3) das vom Temperatursensor (RT) gelieferte Temperatursignal mit einem Offset gewichtet verstärkt wird und im Verstärker (V4) von der Heizerspannung (URH) gewichtet subtrahiert und verstärkt wird.

6. Auswerteschaltung nach einem der vorhergehenden Ansprüche, dadurch gekennzeichnet, daß die Ausgangsspannung des Temperatursensors (RT) in einem Verstärker (V2) verstärkt wird zur Erzeugung der Ausgangsspannung (UA).

7. Auswerteschaltung nach einem der vorhergehenden Ansprüche, dadurch gekennzeichnet, daß der Sensor und die Auswerteschaltung in einem Halbleiterchip, insbesondere Siliziumchip integriert sind.

Fig.1

U[V] 10

UH(T,Q = MAX)

UH(T,Q = 0)

USP(T)

8

6

4

-40        -20         0          20         40         60        80

T

## Fig.2

3

2

$$\frac{UH(T,Q=0) - USP(T)}{UH(T,Q=MAX - UH(T,Q=0)}$$  [%]

1

0

-1

-40        -20         0          20         40         60        80

T

## Fig.3

6

**Europäisches Patentamt**

## EUROPÄISCHER RECHERCHENBERICHT

Nummer der Anmeldung

EP 96 10 1085

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | PATENT ABSTRACTS OF JAPAN vol. 010 no. 038 (P-428) ,14.Februar 1986 & JP-A-60 185119 (MITSUBISHI DENKI KK) 20.September 1985, * Zusammenfassung * --- | 1 | G01F1/699 |
| A | DE-A-38 20 025 (HISS ECKART) 14.Dezember 1989 * Spalte 3, Zeile 18 - Spalte 4, Zeile 4; Abbildungen I,II * --- | 1,2 | |
| D,A | DE-A-43 24 040 (BOSCH GMBH ROBERT) 27.Januar 1994 * Spalte 5, Zeile 4 - Spalte 7, Zeile 2; Abbildungen 3-7 * --- | 1 | |
| A | EP-A-0 212 076 (NIPPON DENSO CO) 4.März 1987 * Spalte 5, Zeile 26 - Zeile 57; Abbildung 3 * --- | 1,2 | |
| A | DE-A-41 43 147 (MITSUBISHI ELECTRIC CORP) 2.Juli 1992 * Seite 2, Zeile 38 - Seite 3, Zeile 24; Abbildungen 3-5 * --- | 1,2 | RECHERCHIERTE SACHGEBIETE (Int.Cl.6) G01F |
| A | EP-A-0 234 298 (ALLIED CORP) 2.September 1987 * Spalte 3, Zeile 16 - Spalte 4, Zeile 45 * ----- | 1 | |

Der vorliegende Recherchenbericht wurde für alle Patentansprüche erstellt

| Recherchenort | Abschlußdatum der Recherche | Prüfer |
|---|---|---|
| DEN HAAG | 4.Juni 1996 | Pflugfelder, G |

EPO FORM 1503 03.82 (P04C03)